# EUROPÄISCHE PATENTANMELDUNG

(11) **EP 0 960 793 A1**
(43) Veröffentlichungstag der Anmeldung: **01.12.1999**
(21) Anmeldenummer: 99108745.3
(22) Anmeldetag: 03.05.1999
(51) Int. Cl.: B60T 11/224, B60T 13/52, B60T 17/18

(54) **Betriebsbremse für ein Fahrzeug**

(30) Priorität: 26.05.1998 DE 19823395; 29.07.1998 DE 19834128
(71) Anmelder: DaimlerChrysler AG, 70567 Stuttgart (DE)
(72) Erfinder: Emmann, Siegfried, 71384 Weinstadt (DE); Mosler, Christian, 70374 Stuttgart (DE); Spielmann, Werner, 71576 Burgstetten (DE)

(57) **Zusammenfassung**

Eine Betriebsbremse für ein Fahrzeug mit zwei Bremskreisen (1,2), die über einen Unterdruck-Bremskraftverstärker (10) und einen Zweikreistandem-Hauptbremszylinder (20) mit unter Druck stehendem Fluid beaufschlagbar sind, ist so ausgebildet, daß wenigstens ein umschaltbares Mittel (50) zur Änderung der hydraulischen Übersetzung vorgesehen ist, durch welches bei einem Ausfall des Bremkraftverstärkers (10) der Druck des Fluids in jedem der beiden Bremskreise (1,2) erhöht wird.

## Beschreibung

Die Erfindung betrifft eine Betriebsbremse für ein Fahrzeug mit zwei Bremskreisen, die über einen Unterdruck-Bremkraftverstärker und einen Zweikreistandem-Hauptbremszylinder mit unter Druck stehendem Fluid beaufschlagbar sind.

Solche Betriebsbremsen werden seit längerem bei praktisch allen Personenkraftwägen und kleineren Nutzfahrzeugen eingesetzt. Die Unterdruck-Bremskraftverstärker sind dabei so ausgelegt, daß bei einem Ausfall des Unterdrucks eine direkte Kopplung eines mit einem Bremspedal verbundenen Kolbens mit dem Kolben des Zweikreistandem-Hauptbremszylinders möglich und in dieser Notsituation das Fahrzeug abbremsbar ist.

Problematisch ist nun, daß in derartigen Notsituationen nur begrenzte Bremspedalkräfte von einer das Bremspedal betätigenden Person aufgebracht werden können, besonders, wenn aus Komfortgründen die Pedalwege bei hilfskraftunterstützter Bremsbetätigung knapp bemessen wurden. Aus diesem Grunde können in Notsituationen nur Fahrzeuge bis etwa 6 Tonnen Gesamtgewicht sicher abgebremst werden. Bei schwereren Fahrzeugen genügt eine derartige Notbremsfunktion der Betriebsbremse nicht mehr.

Aufgabe der Erfindung ist es, eine Betriebsbremse für ein Fahrzeug der gattungsgemäßen Art derart weiterzubilden, daß auch bei schwereren Fahrzeugen bei einem Ausfall des Unterdruck-Bremskraftverstärkers ein zuverlässiges Abbremsen des Fahrzeugs möglich ist, insbesondere soll ein Abbremsen ermöglicht werden, das die gesetzlichen Mindestanforderungen an die Verzögerung des Fahrzeugs bei einem Bremsvorgang erfüllt.

Diese Aufgabe wird bei einer Betriebsbremse für ein Fahrzeug der eingangs beschiebenen Art erfindungsgemäß dadurch gelöst, daß wenigstens ein ansteuerbar umschaltbares Mittel zur Änderung der hydraulischen Übersetzung vorgesehen ist, durch welches bei einem Ausfall des Unterdruck-Bremskraftverstärkers der Druck des Fluids in jedem der beiden Bremskreise erhöht wird.

Durch das ansteuerbar umschaltbare Mittel zur Änderung der hydraulischen Übersetzung, welches den Druck des Fluids bei einem Ausfall des Unterdruck-Bremskraftverstärkers in beiden Bremskreisen erhöht, wird auf besonders einfache Weise in einer Notsituation eine Vergrößerung des Drucks, der in den beiden Bremskreisen herrscht, ermöglicht.

Was die Ausbildung des Mittels zur Änderung der hydraulischen Übersetzung betrifft, so sind hier rein prinzipiell die unterschiedlichsten Ausführungsformen denkbar. Bei einer vorteilhaften Ausführungsform ist vorgesehen, daß das wenigstens eine Mittel zur Änderung der hydraulischen Übersetzung jeweils eine in jedem der beiden Bremskreise dem Zweikreistandem-Bremskraftverstärker nachgeschaltete Stufenkolben-Zylindereinheit ist. Diese Ausführungsform hat insbesondere den großen Vorteil, daß eine Nachrüstung bestehender Betriebsbremsen ohne Veränderung des Bremskraftverstärkers und/oder des Zweikreistandem-Hauptbremszylinders möglich ist.

Dabei ist vorzugsweise vorgesehen, daß jede Stufenkolben-Zylindereinheit einen eingangsseitig abgestuften Stufenkolben aufweist.

Die Umschaltung der Stufenkolben-Zylindereinheiten erfolgt dabei vorteilhafterweise durch ein elektrisch ansteuerbares Ventil.

Das Ventil ist vorzugsweise ein 3/2-Wegeventil, durch welches in seiner einen Schaltstellung ein Eingangsvolumen der Stufenkolben-Zylindereinheit mit einem eingangsseitigen Ringvolumen und in seiner anderen Schaltstellung ein Ausgangsvolumen mit dem eingangsseitigen Ringvolumen der Stufenkolben-Zylindereinheit verbindbar ist. Durch gewissermaßen eine Umschaltung des Ringvolumens zwischen dem eingangsseitigen Eingangsvolumen und dem größeren ausgangsseitigen Ausgangsvolumen wird auf besonders einfache Weise eine Vergrößerung der hydraulischen Übersetzung ermöglicht.

Bei einer anderen sehr vorteilhaften Ausführungsform ist vorgesehen, daß das wenigstens eine Mittel zur Änderung der hydraulischen Übersetzung eine dem Zweikreistandem-Hauptbremszylinder vorgeschaltete Stufenkolben-Zylinder-Einheit ist, die über ein elektrisch ansteuerbares Ventil umschaltbar ist. Bei dieser Ausführungsform wird lediglich noch eine Stufenkolben-Zylinder-Einheit benötigt, wodurch der technische und auch der Kostenaufwand reduziert werden können.

Eine besonders vorteilhafte Ausführungsform sieht dabei vor, daß die Stufenkolben-Zylindereinheit Teil des Zweikreistandem-Hauptbremszylinders ist. Auf diese Weise wird eine weitere Minimierung der erforderlichen Anzahl der Bauteile der Betriebsbremse des Fahrzeugs ermöglicht.

Das Verhältnis der fluidisch wirksamen Flächen der Stufenkolben-Zylindereinheit kann dabei so ausgebildet sein, daß die wirksame Fläche des nicht abgestuften Teils der Stufenkolben-Zylindereinheit etwa so groß ist wie die wirksame Fläche des Zweikreistandem-Hauptbremszylinders. Diese Flächen sind größer als die Fläche des abgestuften Teils der Stufenkolben-Zylindereinheit, so daß eine hydraulische Übersetzung wirksam ist.

Bei einer anderen vorteilhaften Ausführungsform ist die wirksame Fläche des Zweikreistandem-Hauptbremszylinders etwa so groß wie die wirksame Fläche des abgestuften Teils der Stufenkolben-Zylindereinheit. Beide wirksamen Flächen sind kleiner als die fluidisch wirksame Fläche des nicht abgestuften Teils der Stufenkolben-Zylindereinheit. Bei dieser Ausführungsform ist für die Herstellung des Zweikreistandem-Hauptbremszylinders und des abgestuften Teils der Stufenkolben-Zylindereinheit, die Teil des Zweikreistandem-Hauptbremszylinders ist, nur eine Bohrung erforderlich. Dies reduziert den Herstellungsaufwand und damit die Herstellungskosten beträchtlich.

Das Ventil ist hierbei vorzugsweise ein 3/2-Wegeventil, durch welches in einer Schaltstellung ein Ausgangsvolumen mit einem ausgangsseitigen Ringvolumen der Stufenkolben-Zylindereinheit verbindbar ist und durch welches in seiner anderen Schaltstellung das ausgangsseitige Ringvolumen mit einem Eingangsvolumen verbindbar ist. Hierdurch wird wiederum auf einfache Weise eine Vergrößerung der hydraulischen Übersetzung ermöglicht.

Weitere Vorteile und Merkmale der Erfindung sind Gegenstand der nachfolgenden Beschreibung und der zeichnerischen Darstellung einiger Ausführungsbeispiele.

In der Zeichnung zeigen:
- Fig. 1: schematisch ein erstes Ausführungsbeispiel einer erfindungsgemäßen Betriebsbremse für ein Fahrzeug;
- Fig. 2: schematisch eine Schnittdarstellung einer Stufenkolben-Zylinder-Einheit der in Fig. 1 dargestellten Betriebsbremse für ein Fahrzeug und
- Fig. 3: schematisch geschnitten ein Ausführungsbeispiel eines bei einer erfindungsgemäßen Betriebsbremse für ein Fahrzeug einsetzbaren Zweikreistandem-Hauptbremszylinders mit einem in diesen integrierten Mittel zur hydraulischen Übersetzung.

Die Grundidee der vorliegenden Erfindung ist es, in dem Bremsflüssigkeitskreislauf der Betriebsbremse ein hydraulisches Übersetzungsmittel anzuordnen, durch welches bei einem Ausfall des Unterdruck-Bremskraftverstärkers durch eine hydraulische Übersetzung eine Verstärkung des Drucks in dem Hydraulikfluid oder der Bremsflüssigkeit der Bremse hervorgerufen wird. Auf diese Weise wird durch Betätigen des Bremspedals ohne wesentliche Vergrößerung des Pedalweges bei einem Ausfall des Bremskraftverstärkers eine größere Bremswirkung erreicht, wodurch insbesondere auch schwerere Fahrzeuge in Notsituationen zuverlässig abgebremst werden können.

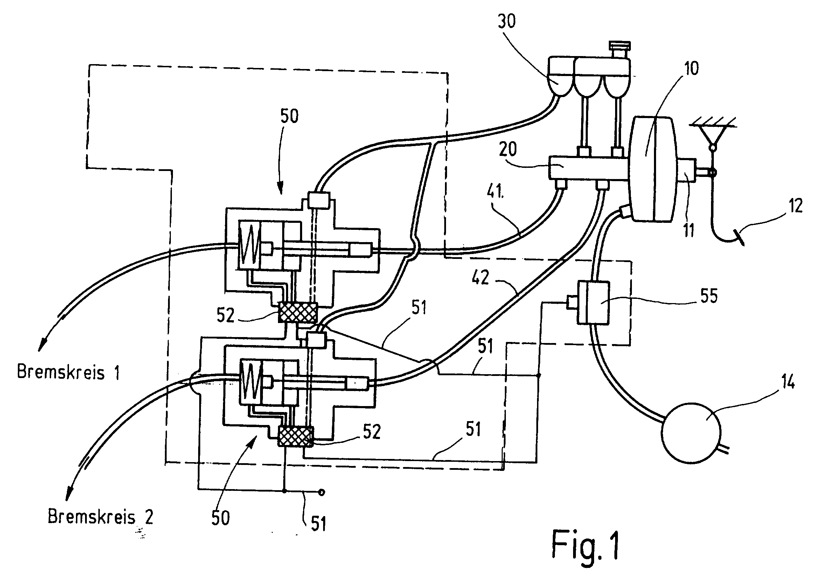

Eine Betriebsbremse eines Fahrzeugs, dargestellt in Fig. 1, umfaßt einen an sich bekannten Unterdruck-Bremskraftverstärker 10, dessen Kolbenstange 11 mit einem Bremspedal 12 verbunden ist. Durch Betätigen des Bremspedals 12 wird verstärkt durch den Unterdruck-Bremskraftverstärker 10 ein Zweikreistandem-Hauptbremszylinder 20 betätigt, der mit einem Bremsflüssigkeitsbehälter 30 fluidisch verbunden ist. Der Zweikreistandem-Hauptbremszylinder 20 ist fluidisch über Leitungen 41, 42 mit einem (nicht dargestellten) ersten Bremskreis 1 und mit einem zweiten Bremskreis 2 verbunden.

In jeder der beiden Hydraulikleitungen 41, 42 ist eine Stufenkolben-Zylindereinheit 50 vorgesehen, welche über ein, über elektrische Leitungen 51 elektrisch ansteuerbares Ventil 52 zwischen einer Position mit kleinerer hydraulischer Übersetzung und einer Position mit größerer hydraulischer Übersetzung umschaltbar ist. Die elektrischen Leitungen 51 sind dabei mit einem Schaltkontakt 55 verbunden, der so geschaltet ist, daß beim Ausfall der Vakuumpumpe 14 eine Umschaltung der Stufenkolben-Zylindereinheit derart erfolgt, daß der Druck des Fluids, d.h. der Bremsflüssigkeit, in jedem der beiden Bremskreise 1 und 2 erhöht und dadurch die Bremswirkung der Bremsen der beiden Bremskreise 1 und 2 verstärkt wird.

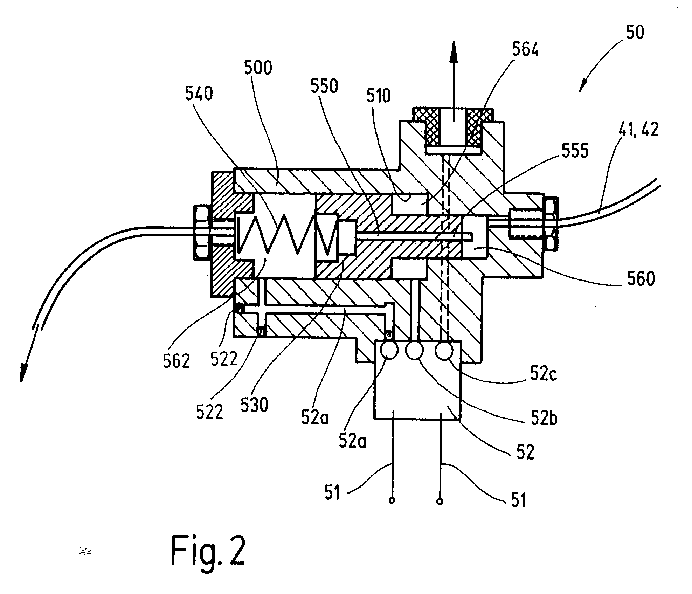

Eine Stufenkolben-Zylindereinheit 50 ist schematisch in Fig. 2 dargestellt. Die Stufenkolben-Zylindereinheit umfaßt ein Gehäuse 500, in dem eine stufige Bohrung 510 vorgesehen ist. In dieser Bohrung ist ein Stufenkolben 530 entgegen der Rückstellkraft einer Rückstellfeder 540 axial verschieblich geführt. Die Stufenkolben-Zylindereinheit 50 ist über ein 3/2-Wegeventil 52, welches über die elektrischen Leitungen 51 ansteuerbar ist, umschaltbar.

Der Stufenkolben 530 der Stufenkolben-Zylindereinheit 50 weist eine axiale Bohrung auf, in der ein Bodenventil 550 angeordnet ist. Das Bodenventil wird bei einer Verschiebung des Stufenkolbens 530 durch die Rückstellfeder 540 so an eine Anschlagfläche im Stufenkolben 530 gedrückt, daß es die Bohrung in dem Stufenkolben 530 verschließt. Ein Betätigungsstift 555 des Bodenventils 550 steht derart über den Stufenkolben 530 auf seiner abgestuften Seite über, daß er bei einem Anschlagen des Stufenkolbens 530 an die ihm gegenüberliegende Wand der Bohrung 510 in dem Gehäuse 500 anschlägt und hierdurch das Bodenventil 550 öffnet. Durch ein derartiges Öffnen des Bodenventils 550 wird eine fluidische Verbindung eines Eingangsvolumens 560 des Stufenkolbens 530 mit einem Ausgangsvolumen 562 ermöglicht.

Wie in Fig. 2 dargesellt ist, ist das 3/2-Wegeventil 52 über drei hydraulische Leitungen 52a, 52b und 52c mit der Stufenkolben-Zylindereinheit 50 verbunden. Dabei mündet die Leitung 52a in das Ausgangsvolumen 562 der Stufenkolben-Zylindereinheit 50, wohingegen die Leitung 52b in ein Ringvolumen 564 der Stufenkolben-Zylindereinheit mündet. Die Leitung 52c ist mit dem Bremsflüssigkeitsbehälter 30, der als Ausgleichsbehälter dient, verbunden. Die Leitungen werden beispielsweise auf einfache Weise durch Bohrungen in dem Gehäuse 500 hergestellt, deren Eingänge durch Verschlußelemente 522, vorzugsweise Kugeln, verschlossen sind, wenn die Leitungen wie im Falle der Leitung 52a, abgewinkelt verlaufen.

Wenn nun durch die Vakuumpumpe 14 ein Unterdruck erzeugt wird und der Bremskraftverstärker 10 ordnungsgemäß funktioniert, befindet sich das 3/2-Wegeventil 52 in einer ersten Schaltstufe, in der die Leitung 52b mit der Leitung 52c verbunden ist. In dieser Schaltstufe ist demnach das Ringvolumen 564 der Stufenkolben-Zylindereinheit 50 mit dem Ausgleichsbehälter 30 verbunden. Wenn nun das Eingangsvolumen 560 mit unter Druck stehendem Fluid beaufschlagt wird, ist nur die kleine Fläche des Stufenkolbens 530 in dem Eingangsvolumen 560 wirksam, da die Ringfläche des Stufenkolbens 530 in dem Ringvolumen 564 durch Verbindung mit dem Ausgleichsbehälter 30 hydraulisch nicht wirksam ist. Da nun die Fläche des Stufenkolbens 530 in dem Ausgangsvolumen 562 größer ist als die Kolbenfläche des Stufenkolbens 530 in dem Eingangsvolumen 560, ist in dieser Schaltstufe des 3/2-Wegeventils der Ausgangsdruck, der an den Radbremsen anliegt, kleiner als der in den Hydraulikleitungen 41, 42 liegende Eingangsdruck. In dieser Schaltstufe ist durch die Stufenkolben-Zylindereinheit 50 mit anderen Worten eine hydraulische Untersetzung realisiert.

Bei Ausfall des Unterdruck-Bremskraftverstärkers 10, d.h. dann, wenn beispielsweise die Unterdruckpumpe 14 ausfällt, was durch den Schaltkontakt 55 detektiert wird, wird das 3/2-Wegeventil 52 in eine zweite Schaltstufe geschaltet, in der Leitung 52a mit Leitung 52b verbunden ist.

In dieser Position ist das Ausgangsvolumen 562 mit dem Ringvolumen 564 verbunden. Wenn nun über die Hydraulikleitungen 41, 42 das Eingangsvolumen 560 mit unter Druck stehendem Fluid beaufschlagt wird, ist neben der in dem Eingangsvolumen 560 wirksamen Fläche des abgestuften Teils des Stufenkolbens 530 auch die Ringfläche in dem Ringvolumen 564 des Stufenkolbens 530 wirksam. Beide Flächen entsprechen zusammengenommen der Fläche des Stufenkolbens in dem Ausgangsvolumen 562, weshalb in dieser Schaltstufe eine 1:1 Übersetzung der Stufenkolben-Zylindereinheit realisiert ist.

Relativ zu der oben beschriebenen ersten Schaltstufe stellt diese 1:1 Übersetzung eine größere Übersetzung dar, da in Schaltstufe 1 - wie oben beschrieben - eine Untersetzung realisiert ist. Bei Ausfall des Unterdruck-Bremskraftverstärkers 10 wird demnach bei einem vergleichbaren Pedalweg in der zu den Radbremsen führenden Ausgangsleitung ein größerer hydraulischer Druck erzeugt, verglichen mit dem hydraulischen Druck, der bei einer normalen Betriebsweise, d.h. bei einem intakten Unterdruck-Bremsverstärker 10 an den Radbremsen anliegt. Anders ausgedrückt, wird die Bremskraft bei vergleichbarem Pedalweg bei Ausfall des Unterdruck-Bremskraftverstärkers 10 vergrößert. Eine solche Vergrößerung ist bei vergleichbaren Pedalwegen aufgrund des Pascalschen Gesetzes nur durch ein hydraulisches Übersetzungmittel, wie es die Stufenkolben-Zylindereinheit 50 darstellt, möglich, da eine Erhöhung des Drucks bei Wegfall der Stufenkolben-Zylindereinheit 50 eine Vergrößerung des Pedalwegs erforderte, die bei Fahrzeugen nicht ohne weiteres realisierbar ist.

Der große Vorteil der oben beschriebenen Ausführungsform ist darin zu sehen, daß sie ohne weiteres einfach in bestehende Fahrzeuge lediglich durch Einbau der Stufenkolben-Zylindereinheit 50 in die Hydraulikleitungen 41, 42 und durch Anordnen des Schaltkontakts 55 im Unterdruckkreislauf nachrüstbar ist.

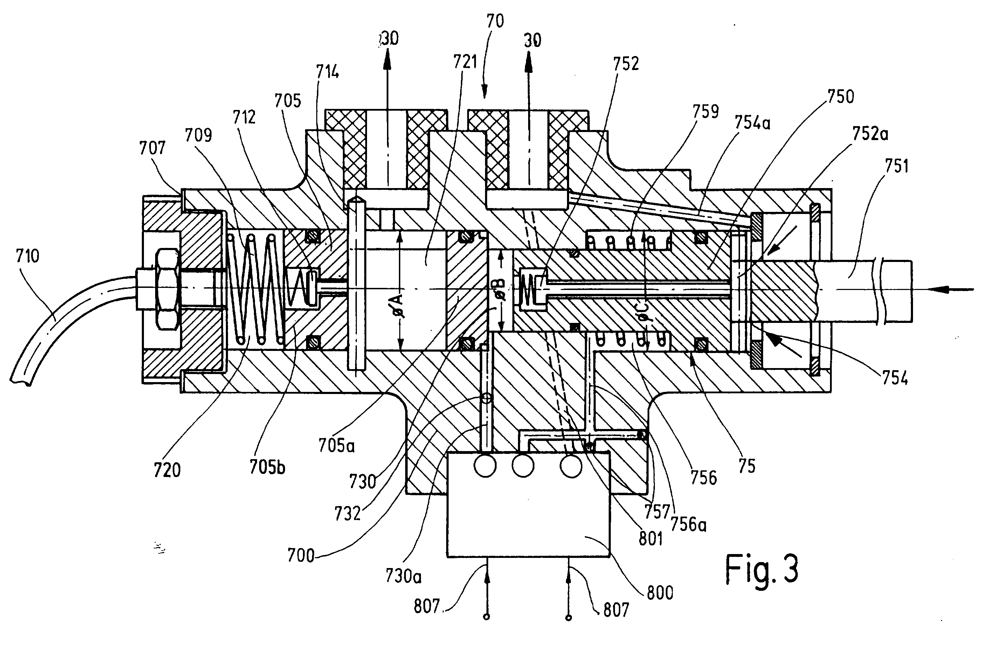

Bei einer anderen Ausführungsform einer vorteilhaften Betriebsbremse wird ein Zweireistandem-Hauptbremszylinder 70 mit einer Übersetzungs-Hydraulik verwendet, wie er schematisch in Fig. 3 dargestellt ist.

Wie aus Fig. 3 hervorgeht, umfaßt der Zweikreistandem-Hauptbremszylinder 70 ein Gehäuse 700, in dem auf an sich bekannte Weise in einer Bohrung ein durch Dichtungen 707 gegen die Bohrung abgedichteter Kolben 705 entgegen der Rückstellkraft einer Rückstellfeder 709 axial verschieblich ist. Der Kolben 705 weist ein Zwischen- oder Schwimmkolbenteil 705a und einen ausgangsseitigen Kolbenteil 705b auf. In dem Kolben 705 ist ein an sich bekanntes und oben beschriebenes Bodenventil 712 angeordnet, dessen Betätigungsstange in der Ruhestellung des Kolbens 705 gegen einen in dem Gehäuse 700 senkrecht zur Kolbenbewegung befestigten Stift 714 anschlägt und so eine Verbindung eines Ausgangsvolumens 720 des Zweikreistandem-Hauptbremszylinders 70 mit dem Ausgleichsbehälter 30 über ein Zwischenvolumen 721 herstellt. Durch diese fluidische verbindung wird das Ausgangsvolumen 720 mit hydraulischem Fluid beaufschlagt. Das Bodenventil 712 wird auch als "Schnüffelventil" bezeichnet. Ein erster Bremskreis ist mit dem Ausgangsvolumen 720 durch eine fluidische Leitung 710 verbunden.

Neben dem Ausgangsvolumen 720 ist in dem Zweikreistandem-Hauptbremszylinder ein weiteres, zweites Ausgangsvolumen 730 vorgesehen, welches über einen Anschluß 732 mit dem zweiten Bremskreis verbunden ist. Durch axiale Verschiebung des Kolbens 705 des Zweikreistandem-Hauptbremszylinders 70 werden die beiden Bremskreise auf an sich bekannte Weise mit unter Druck stehendem Fluid beaufschlagt.

Diesem Tandem-Hauptbremszylinder gewissermaßen vorgeschaltet, ist eine Stufenkolben-Zylindereinheit 75, welche einen ausgangsseitig abgestuften Druckstangenkolben 750, der über eine Druckstange 751 mit der Kolbenstange des Bremskraftverstärkers verbunden ist, so daß eine Pedalkraft über die Druckstange 751 auf den Druckstangenkolben 750 übertragbar ist. Der Druckstangenkolben weist ein Boden- oder Schnüffelventil 752 auf, dessen Betätigungsstange in der Ruhestellung der Stufenkolben-Zylindereinheit 75 gegen einen in dem Gehäuse 700 senkrecht zur Kolbenbewegung befestigten Stift 752a anschlägt und eine fluidische Verbindung eines Eingangsvolumens 754 des Zweikreistandem-Hauptbremszylinders 70 mit dessen zweitem Ausgangsvolumen 730 ermöglicht, so daß dieses zweite Ausgangsvolumen 730 mit Fluid beaufschlagbar ist. Die Stufenkolben-Zylindereinheit 75 umfaßt folgende wirksame Volumina: Das Eingangsvolumen 754, ein Ringvolumen 756 und das zweite Ausgangsvolumen 730.

Das Eingangsvolumen 754 ist über eine Hydraulikleitung 1 754a mit dem Ausgleichsbehälter 30 verbunden. Das Ringvolumen 756 ist über eine endseitig jeweils durch Verschlußmittel 757, vorzugsweise Kugeln, verschlossene Leitung 756a mit einem Eingang eines 3/2-Wegeventils 800 verbunden. Ein weiterer Eingang des 3/2-Wegeventils 800 ist über eine weitere Leitung 801 mit dem Ausgleichsbehälter verbunden. Ein dritter Anschluß des 3/2-Wegeventils 800 ist über eine hydraulische Leitung 730a mit dem zweiten Ausgangsvolumen 730 des Zweikreistandem-Hauptbremszylinders 70 verbunden. In diese Leitung 730a mündet auch - wie oben beschrieben - der Anschluß 732 für einen der beiden Bremskreise.

Der abgestufte Druckstangenkolben 750 kann sich in der abgestuften Bohrung in dem Gehäuse 700 entgegen der Rückstellkraft einer Rückstellfeder 759 axial bewegen.

Die Funktion des oben beschriebenen Zweikreistandem-Hauptbremszylinders ist nun folgende. In einer ersten Schaltstufe eines über elektrische Leitungen 807 ansteuerbares 3/2-Wegeventils 800, die immer dann eingeschaltet ist, wenn die Bremskraft durch den Unterdruck-Bremskraftverstärker verstärkt wird, wenn also mit anderen Worten die Unterdruckpumpe 14 keinen Defekt aufweist, ist die Leitung 730a durch das 3/2-Wegeventil mit der Leitung 756a verbunden. In dieser Schaltstufe ist demnach das Ringvolumen 756 der Stufenkolben-Zylindereinheit 75 mit dem zweiten Ausgangsvolumen 730 des Zweikreistandem-Hauptbremszylinders 70 verbunden. Das 3/2-Wegeventil 800 ist in dieser Schaltstellung stromdurchflossen. Durch die Verbindung des zweiten Ausgangsvolumens 730 des Zweikreistandem-Hauptbremszylinders 70 mit dem Ringvolumen 756 der Stufenkolben-Zylindereinheit 75 wird eine hydraulische Untersetzung in dieser Schaltstufe des 3/2-Wegeventils 800 realisiert, da die in dieser Schaltstufe wirksame Fläche ØC der Stufenkolben-Zylindereinheit 75 größer ist als die wirksame Fläche des abgestuften Druckstangenkolbens 750 in dem zweiten Ausgangsvolumen 730 ØB und da die Fläche des zweigeteilten Kolbens 705 des Zweikreistandem-Hauptbremszylinders 70 ØA etwa der dieser Schaltstufe wirksamen Gesamtfläche ØC der Stufenkolben-Zylindereinheit 75 entspricht.

Die Fläche ØA des zweigeteilten Kolbens 705 des Zweikreistandem-Hauptbremszylinders 70 kann auch so groß sein kann wie die Fläche ØB des abgestuften Druckstangenkolbens 750 (nicht dargestellt). Diese Ausführungsform ermöglicht insbesondere eine besonders einfache Herstellung des Zweikreistandem-Hauptbremszylinders 70, da in diesem Fall im Gehäuse 700 des Hauptbremszylinders 70 nur eine einfache Bohrung erforderlich ist.

Wenn nun durch Ausfall beispielsweise der Unterdruckpumpe 14 oder auf andere Weise der Unterdruck in dem Unterdruck-Bremskraftverstärker ausfällt, was durch den Schaltkontakt 55 detektiert wird, wird das 3/2-Wegeventil 800 in seine zweite Schaltstufe umgeschaltet, was vorzugsweise auf elektromagnetischem Wege erfolgt. In dieser zweiten Schaltstufe sind die Leitungen 756a und 801 verbunden. In dieser Schaltstufe ist demnach der Ringraum 756 mit dem Ausgleichsbehälter 30 verbunden. Wenn nun der Druckstangenkolben 750 der Stufenkolben-Zylindereinheit 75 mit einer Kraft beaufschlagt wird, liegt im Vergleich mit dem in der obenbeschriebenen ersten Schaltstufe herrschenden Druck in dem zweiten Ausgangsvolumen 730 ein höherer Druck an, da die wirksame Fläche ØB der Stufenkolben-Zylindereinheit 75 kleiner ist als die wirksame Fläche ØA der Stufenkolben-Zylindereinheit 75. Bei Ausfall des Unterdruck-Bremskraftverstärkers herrscht mit anderen Worten ein erhöhter Druck in den beiden Bremskreisen verglichen mit dem Druck, der während einer normalen Betriebsweise des Unterdruck-Bremskraftverstärkers herrscht. In dieser zweiten Schaltstufe ist das 3/2-Wegeventil 800 vorzugsweise stromlos.

Bei beiden oben beschriebenen Ausführungsformen einer Betriebsbremse liegt bei dem Ausfall des Unterdruck-Bremskraftverstärkers ein höherer Druck an den Radbremsen an, verglichen mit dem Druck der bei einer ordnungsgemäßen Funktion des Unterdruck-Bremskraftverstärkers an den Radbremsen anliegt. Der höhere Druck wird durch hydraulische Übersetzungsmittel in Form von Stufenkolben-Zylindereinheiten realisiert. Durch diese hydraulische Übersetzung müssen in einer Notsituation geringere Pedalkräfte aufgewendet werden, verglichen mit den Pedalkräften, die aufgewendet werden müßten, wenn derartige hydraulische Übersetzungsmittel in Form von Stufenkolben-Zylindereinheiten nicht vorhanden wären. Die dabei zurückzulegenden Pedalwege vergrößern sich dabei praktisch nicht.

## Patentansprüche

1. Betriebsbremse für ein Fahrzeug mit zwei Bremskreisen, die über einen Unterdruck-Bremskraftverstärker (10) und einen Zweikreistandem-Hauptbremszylinder (20; 70) mit unter Druck stehendem Fluid beaufschlagbar sind, dadurch gekennzeichnet, daß wenigstens ein umschaltbares Mittel zur Änderung der hydraulischen Übersetzung (50, 75) vorgesehen ist, durch welches bei einem Ausfall des Bremkraftverstärkers (10) der Druck des Fluids in jedem der beiden Bremskreise erhöht wird.

2. Betriebsbremse nach Anspruch 1, dadurch gekennzeichnet, daß das wenigstens eine Mittel zur Änderung der hydraulischen Übersetzung jeweils eine in jedem der beiden Bremskreise dem Zweikreistandem-Hauptbremszylinder nachgeschaltete Stufenkolben-Zylindereinheit ist.

3. Betriebsbremse nach Anspruch 2, dadurch gekennzeichnet, daß jede Stufenkolben-Zylindereinheit (50) einen eingangsseitig abgestuften Stufenkolben (530) aufweist.

4. Betriebsbremse nach Anspruch 2 oder 3, dadurch gekennzeichnet, daß die Stufenkolben-Zylindereinheit (50) durch ein elektrisch ansteuerbares Ventil (52) umschaltbar ist.

5. Betriebsbremse nach Anspruch 3 oder 4, dadurch gekennzeichnet, daß das Ventil ein 3/2-Wegeventil ist, durch welches in seiner einen Schaltstellung ein Eingangsvolumen (560) mit einem eingangsseitigen Ringvolumen (564) der Stufenkolben-Zylindereinheit (50) und in seiner anderen Schaltstellung ein Ausgangsvolumen (562) mit dem Ringvolumen (564) der Stufenkolben-Zylindereinheit verbindbar ist.

6. Betriebsbremse nach Anspruch 1, dadurch gekennzeichnet, daß das wenigstens eine hydraulische Übersetzungsmittel eine dem Zweikreistandem-Hauptbremszylinder (20; 70) vorgeschaltete Stufenkolben-Zylindereinheit (75) ist, die über ein elektrisch ansteuerbares Ventil (800) umschaltbar ist.

7. Betriebsbremse nach Anspruch 5, dadurch gekennzeichnet, daß die Stufenkolben-Zylindereinheit (75) einen ausgangsseitig abgestuften Druckstangenkolben (750) aufweist.

8. Betriebsbremse nach Anspruch 6 oder 7, dadurch gekennzeichnet, daß die Stufenkolben-Zylindereinheit (75) Teil des Zweikreistandem-Hauptbremszylinders (70) ist.

9. Betriebsbremse nach einem der Ansprüche 6 bis 8, dadurch gekennzeichnet, daß die fluidisch wirksame Fläche (ØC) des nicht abgestuften Teils der Stufenkolben-Zylindereinheit (75) etwa so groß ist wie die fluidisch wirksame Fläche (ØA) des ZweikreistandemHauptbremszylinders und daß diese Flächen (ØC, ØA) größer sind als die fluidische wirksame Fläche (ØB) des abgestuften Teils der Stufenkolben-Zylindereinheit (75).

10. Betriebsbremse nach einem der Ansprüche 6 bis 8, dadurch gekennzeichnet, daß die fluidisch wirksame Fläche (ØA) des Zweikreistandem-Hauptbremszylinders (70) etwa so groß ist wie die fluidisch wirksame Fläche(ØB) des abgestuften Teils der Stufenkolben-Zylindereinheit (75) und daß diese beiden Flächen (ØA, ØB) kleiner sind als die fluidisch wirksame Fläche (ØC) des nicht abgestuften Teils der Stufenkolben-Zylindereinheit (75).

11. Betriebsbremse nach einem der Ansprüche 6 bis 8, dadurch gekennzeichnet, daß das elektrisch ansteuerbare Ventil ein 3/2-Wegeventil ist, das in seiner einen Schaltstellung ein Ausgangsvolumen (730) des Zweikreistandem-Hauptbremszylinders (70) mit einem ausgangsseitigen Ringvolumen (756) der Stufenkolben-Zylindereinheit (75) verbindet und das in seiner anderen Schaltstellung das ausgangsseitige Ringvolumen (756) der Stufenkolben-Zylindereinheit (75) mit deren Eingangsvolumen (754) verbindet.
